# EUROPEAN PATENT APPLICATION

(11) **EP 4 712 572 A1**
(43) Date of publication of application: **18.03.2026**
(21) Application number: 24803585.9
(22) Date of filing: 18.03.2024
(51) Int. Cl.: H04W 48/02, H04W 8/02, H04W 60/04, H04W 48/18

(54) **APPARATUS AND METHOD FOR PROCESSING NON-ACCESS STRATUM MESSAGE IN WIRELESS COMMUNICATION SYSTEM**

(30) Priority: 08.05.2023 US 202363464633 P
(71) Applicant: LG Electronics Inc., Yeongdeungpo-gu Seoul 07336 (KR)
(72) Inventor: KIM, Sunhee, Seoul 06772 (KR); KIM, Hyunsook, Seoul 06772 (KR); CHOE, Hyunjung, Seoul 06772 (KR); KIM, Minseon, Seoul 06772 (KR)
(74) Representative: Plasseraud IP
(86) International application number: PCT/KR2024/003332
(87) International publication number: WO 2024/232529

(57) **Abstract**

The present disclosure relates to an apparatus and a method for processing a non-access stratum (NAS) message in a wireless communication system, wherein the method performed by a terminal may comprise the steps of: initiating a NAS transport procedure; detecting a failure to transmit an uplink (UL) NAS transport message due to a change in a tracking area identifier (TAI); comparing the changed TAI with a TAI list; and determining whether to stop the NAS transport procedure on the basis of the result of the comparison.

## Description

### TECHNICAL FIELD

The present disclosure relates to a wireless communication system, and more particularly, to a device and method for processing non-access stratum (NAS) messages in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to a device and method for effectively processing a non-access stratum (NAS) message in a wireless communication system.

The present disclosure relates to a device and method for processing an uplink (UL) NAS transport message whose transmission is failed in a wireless communication system.

The present disclosure relates to a device and method for determining whether to abort an NAS transport procedure initiated by a UE based on a tracking area identifier (TAI) list in a wireless communication system.

The present disclosure relates to a device and method for determining whether to abort an NAS transport procedure based on whether a changed TA supports single network slice selection assistance information (S-NSSAI) in a wireless communication system.

The present disclosure relates to a device and method for determining whether to abort an NAS transport procedure based on a lower layer report related to S-NSSAI in a wireless communication system.

The present disclosure relates to a device and method for determining whether to abort an NAS transport procedure based on whether a UE supports partial network slice in a wireless communication system.

The present disclosure relates to a device and method for determining whether to abort an NAS transport procedure based on a partially allowed NSSAI or partially rejected NSSAI in a wireless communication system.

The present disclosure relates to a device and method for determining whether to abort an NAS transport procedure based on an alternative NSSAI in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

In an embodiment of the present disclosure, a method performed by a User Equipment (UE) in a wireless communication system comprises, initiating a non-access stratum (NAS) transport procedure, detecting a transmission failure of an uplink (UL) NAS transport message due to a change in a tracking area identifier (TAI), comparing a changed TAI with a TAI list, and determining whether to abort the NAS transport procedure based on a comparison result, wherein determining of whether to abort the NAS transport procedure is based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE..

In an embodiment of the present disclosure, a User Equipment (UE) in a wireless communication system comprises a transceiver; and a processor connected to the transceiver, wherein the processor is configured to: initiate a non-access stratum (NAS) transport procedure, detect a transmission failure of an uplink (UL) NAS transport message due to a change in a tracking area identifier (TAI), compare a changed TAI with a TAI list, and determine whether to abort the NAS transport procedure based on a comparison result, wherein determining of whether to abort the NAS transport procedure is based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.

In an embodiment of the present disclosure, a communication device includes, at least one processor, and at least one computer memory connected to the at least one processor and storing instructions that, based on being executed by the at least one processor, perform operations comprising: initiating a non-access stratum (NAS) transport procedure; detecting a transmission failure of an uplink (UL) NAS transport message due to a change in a tracking area identifier (TAI); comparing a changed TAI with a TAI list; and determining whether to abort the NAS transport procedure based on a comparison result, wherein determining of whether to abort the NAS transport procedure is based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.

In an embodiment of the present disclosure, a non-transitory computer-readable medium storing at least one instruction, the computer-readable medium comprising at least one instruction executable by a processor, the at least one instruction causing a device to: initiate a Non-Access Stratum (NAS) transport procedure, detect a transmission failure of an uplink (UL) NAS transport message due to a change of a Tracking Area Identifier (TAI), compare a changed TAI with a TAI list, and determine whether to abort the NAS transport procedure based on a comparison result, wherein determining of whether to abort the NAS transport procedure is based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.

The above-described aspects of the present disclosure are only some of the preferred embodiments of the present disclosure, and various embodiments reflecting the technical features of the present disclosure can be derived and understood by a person having ordinary skill in the art based on the detailed description of the present disclosure to be described below.

### ADVANTAGEOUS EFFECTS

Embodiments based on the present disclosure may have the following effects:

The present disclosure can effectively process NAS messages in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5 illustrates a case where service continuity is not guaranteed due to a lack of slice resources applicable to the present disclosure.
FIG. 6 illustrates an example of an NAS message processing procedure according to an embodiment of the present disclosure.
FIG. 7 illustrates a specific procedure for processing an NAS message based on specified conditions according to an embodiment of the present disclosure.
FIG. 8 illustrates an example of a procedure for processing an NAS message via lower layer report according to an embodiment of the present disclosure.
FIG. 9 illustrates an example of a procedure for processing an NAS message based on an alternate S-NSSAI according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

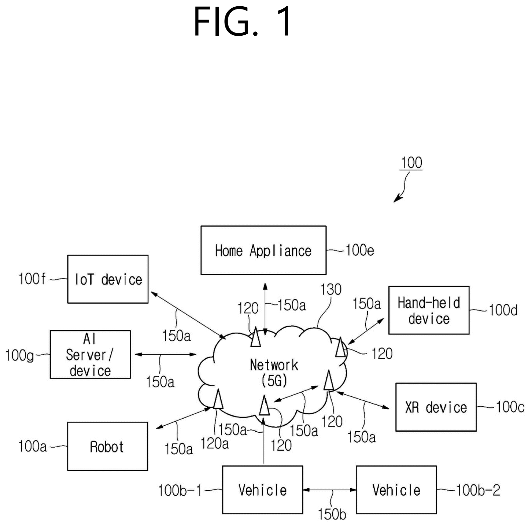

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

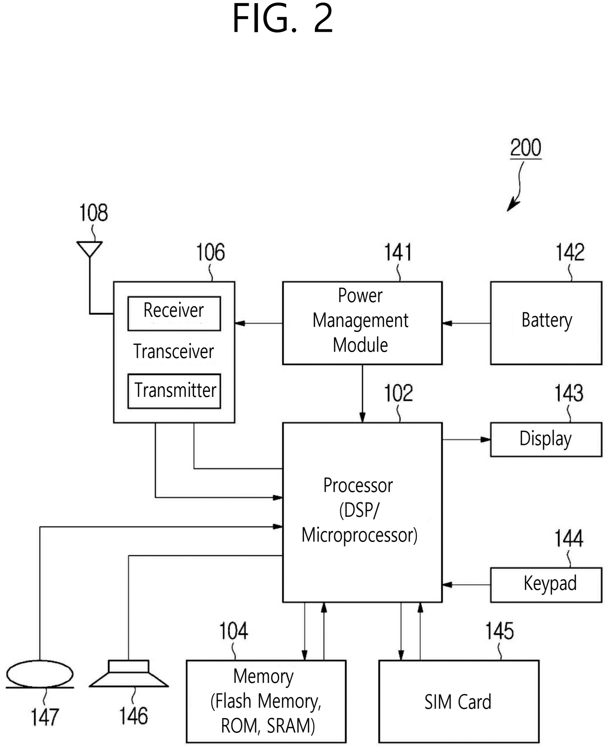

FIG. 2 illustrates an example of a UE applicable to the present disclosure.

Referring to FIG. 2, the UE 200 may include a processor 102, memory 104, transceiver 106, one or more antennas 108, power management module 141, battery 142, display 143, keypad 144, Subscriber Identification Module (SIM) card 145, speaker 146, and microphone 147.

The processor 102 may be configured to implement the descriptions, functions, procedures, proposals, methods and/or operational flowcharts disclosed herein. The processor 102 may be configured to control one or more other components of the UE 200 to implement the descriptions, functions, procedures, proposals, methods and/or operational flowcharts disclosed herein. Layers of wireless interface protocol may be implemented in the processor 102. The processor 102 may include ASIC, other chipset, logic circuit and/or data processing device. The processor 102 may be an application processor. The processor 102 may include at least one of DSP, Central Processing Unit (CPU), Graphics Processing Unit (GPU), and modem (modulator and demodulator).

The memory 104 is operably coupled with the processor 102 and may store various information for operating the processor 102. The memory 104 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 14 and executed by the processor 102. The memory 104 may be implemented within the processor 102 or external to the processor 102, in which case it may be communicatively coupled with the processor 102 through various methods known in the art.

The transceiver 106 is operably coupled with the processor 102 and may transmit and/or receive wireless signals. The transceiver 106 may include a transmitter and a receiver. The transceiver 106 may include baseband circuitry for processing radio frequency signals. The transceiver 106 may control one or more antennas 108 to transmit and/or receive wireless signals.

The power management module 141 may manage power for the processor 102 and/or transceiver 106. The battery 142 may supply power to the power management module 141.

The display 143 may output results processed by the processor 102. The keypad 144 may receive input for use by the processor 102. The keypad 144 may be displayed on the display 143.

The SIM card 145 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 146 may output sound-related results processed by the processor 102. The microphone 147 may receive sound-related input for use by the processor 102.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

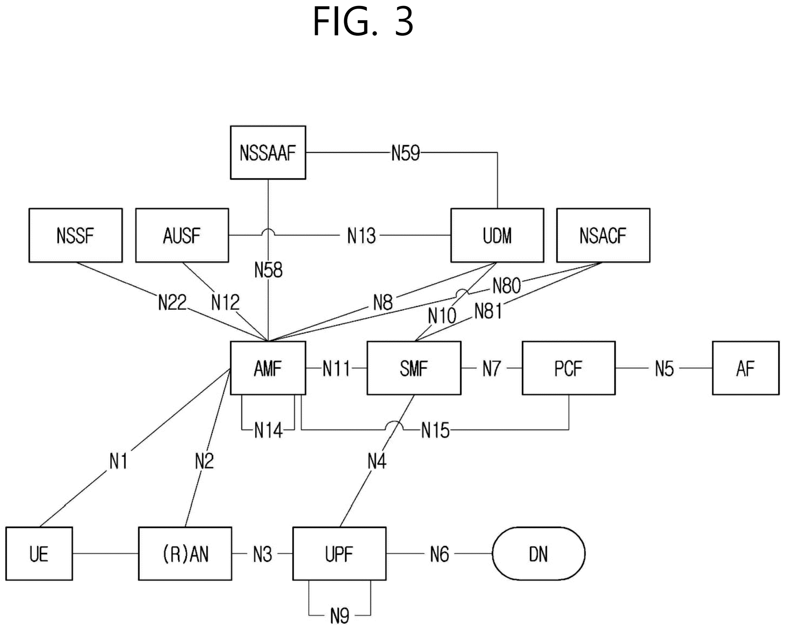

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

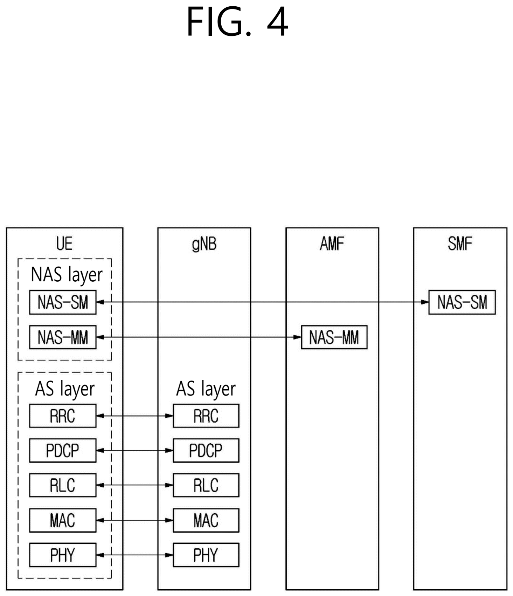

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

### Specific Embodiments of the Present Disclosure

The present disclosure relates to a device and method for processing a non-access stratum (NAS) message in a wireless communication system. Specifically, the present disclosure relates to a device and method for processing a NAS transport message based on whether a UE supports partial network slice and/or network slice replacement when transmission of an uplink (UL) NAS transport message fails due to a change in a tracking area identifier (TAI). The NAS transport message may be referred to as a UL NAS transport message or another term having a corresponding technical meaning.

Referring to 3GPP TR 23.700-41, research is being conducted on ways to improve the network slice architecture to address the problems inherent in the network slice architecture. Specifically, various scenarios are being discussed, such as when a network slice or network slice instance does not meet the requirements of a PDU session or application, when a service has a service area that does not overlap with an already deployed tracking area (TA) in a deployment scenario, or when a service is maintained for only a certain period of time, etc., whether these scenarios may be resolved with the current network slice architecture or whether new solutions are needed.

[Table 1] outlines the scope of research focused on in the present disclosure among the various scopes to be studied for network slice enhancement.

**[Table 1]**

| | | | |
|---|---|---|---|
| 1 Scope | | | |
| The Technical Report studies the gaps and performs evaluations of potential architecture enhancements to support Network Slicing with the following objectives: | | | |
| | 1. Study whether and how to address the following scenario in order to provide service continuity: if an existing network slice or network slice instance cannot serve the PDU session, or if the existing network slice instance cannot meet the performance requirements of the applications. The study should investigate whether deployment optimization is sufficient. Minimized system optimisations can be considered if valuable. | | |
| | 5 Study deployment considerations when a service provided has an area of service that does not overlap with the already deployed Tracking Areas and/or have a limited lifetime and how existing mechanisms including network slicing can help support such scenarios. If existing mechanisms are concluded to be not sufficient to achieve the scenarios, study whether and how additional mechanisms can resolve the analysed gap. | | |

Key issues and solutions for Scopes 1 and 5, as shown in [Table 1], have been discussed. Key issue #1 (KI#1) for scope 1 concerns support for continuity of network slice services, and key issue #5 (KI#5) for scope 5 concerns improved support for RAs that include TAs supporting rejected single network slice selection assistance information (S-NSSAI). As solutions for KI#1 and KI#5, respectively, the use of an alternative S-NSSAI and the use of partially rejected and partially allowed S-NSSAIs have been proposed.

Furthermore, a change request (CR) related to KI#1, as shown in [Table 2], was approved at the TSG-SA2 #155 meeting. [Table 2] presents the network slice replacement support scheme extracted from the CR for S2-2303882.

**[Table 2]**

| | | | |
|---|---|---|---|
| 5.15.x Support of Network Slice Replacement | | | |
| The Network Slice Replacement feature is used to replace an S-NSSAI with an Alternative S-NSSAI when an S-NSSAI becomes unavailable or congested. The Network Slice Replacement may be triggered in the following cases: | | | |
| | - If the NSSF detects that an S-NSSAI becomes unavailable or congested (e.g., based on OAM or NWDAF analytics output), it sends network slice availability notification for the S-NSSAI to the AMF. The notification may include an Alternative S-NSSAI which can be used by the AMF to replace the S-NSSAI. The NSSF notifies the AMF when the S-NSSAI is available again. | | |
| | - If the PCF detects that an S-NSSAI becomes unavailable or congested for a UE (e.g., based on OAM or NWDAF analytics output), it sends access and mobility related policy notification to the AMF. The notification may include an Alternative S-NSSAI which can be used by the AMF to replace the S-NSSAI. The PCF notifies the AMF when the S-NSSAI is available again for the UE. | | |
| | - The OAM sends notification to AMF when an S-NSSAI becomes unavailable or congested (and also when this S-NSSAI becomes available again) and provides the Alternative S-NSSAI to AMF. | | |
| Based on the notification above from NSSF or PCF or OAM, the AMF may determine that an S-NSSAI is to be replaced with Alternative S-NSSAI. For roaming case, the AMF may receive network slice availability notification of the HPLMN S-NSSAI from NSSF in the HPLMN via NSSF in VPLMN, to trigger the Network Slice Replacement of the HPLMN S-NSSAI as described in clause 5.15.6. | | | |
| | NOTE 1: It is recommended that, the operator configures to use only one mechanism when triggering the Network Slice Replacement for S-NSSAI. | | |
| The AMF determines the Alternative S-NSSAI for a UE registered with the S-NSSAI based on the notification from NSSF or PCF, or based on local configuration if the NSSF or PCF do not provide an alternative S-NSSAI. | | | |
| The Alternative S-NSSAI shall be supported in the UE Registration Area. If AMF cannot determine the Alternative S-NSSAI for the S-NSSAI, e.g. PCF or NSSF doesn't provide Alternative S-NSSAI, the AMF may further interact with the PCF to determine the Alternative S-NSSAI. The event trigger in AMF for interacting with PCF is described in clause 6.1.2.5 of TS 23.503[45]. | | | |
| The UE indicates the support of Network Slice Replacement feature during the UE Registration procedure. For supporting UE in CM-CONNECTED mode, and if there is a PDU Sessions in the UE context associated with the S-NSSAI that needs to be replaced, the AMF provides the Alternative S-NSSAI for this S-NSSAI in the Allowed NSSAI and in the Configured NSSAI, if not included yet, and the mapping between S-NSSAI(s) to Alternative S-NSSAI(s) to the UE in UE Configuration Update message as follows: | | | |
| | - for non-roaming UEs, the AMF provides the mapping of the S-NSSAI to the Alternative S-NSSAI to the UE. | | |
| | - for roaming UEs when the VPLMN S-NSSAI has to be replaced by a VPLMN Alternative S-NSSAI, the AMF provides the mapping of the VPLMN S-NSSAI to the Alternative VPLMN S-NSSAI to the UE. | | |
| | - for roaming UEs when the HPLMN S-NSSAI has to be replaced by an Alternative HPLMN S-NSSAI, the AMF provides the mapping of the HPLMN S-NSSAI to the Alternative HPLMN S-NSSAI to the UE. | | |
| | NOTE 2: The Alternative S-NSSAI or Alternative HPLMN S-NSSAI may be part or not part of the Subscribed S-NSSAI. | | |
| For the supporting UE in CM-IDLE state, when the UE establishes a NAS signalling connection, e.g. through a Service Request procedure or through a UE registration procedure, if the AMF determines that the S-NSSAI is to be replaced and there is a PDU Session associated with the S-NSSAI in the UE context, the AMF sends the mapping of the S-NSSAI to the Alternative S-NSSAI to the UE in the UE Configuration Update message or in the Registration Accept message. | | | |
| | Editor's note: Whether to send the mapping of the S-NSSAI to the Alternative S-NSSAI to the UE when there is no PDU session associated with the S-NSSAI is FFS. | | |
| During a new PDU Session establishment procedure towards an S-NSSAI, | | | |
| | - if the UE is provided with the mapping of the S-NSSAI to an Alternative S-NSSAI, the UE provides both the Alternative S-NSSAI and the S-NSSAI in the PDU Session Establishment message. When the AMF receives the Alternative S-NSSAI and the S-NSSAI in the PDU Session Establishment message, or when the AMF receives only the S-NSSAI in PDU Session Establishment message the AMF determines that the S-NSSAI is to be replaced with the Alternative S-NSSAI, the AMF includes both the Alternative S-NSSAI and the S-NSSAI to the SMF. | | |
| | - if the UE is not provided with the mapping of the S-NSSAI to the Alternative S-NSSAI, the UE provides the S-NSSAI in the PDU Session Establishment message. When the AMF determines that the requested S-NSSAI is to be replaced with the Alternative S-NSSAI and if the UE supports Network Slice Replacement, the AMF performs UE Configuration Update procedure to reconfigure the UE with the Alternative S-NSSAI. The AMF continues the PDU Session establishment procedure with the Alternative S-NSSAI and provides both the Alternative S-NSSAI and the S-NSSAI to the SMF. | | |
| The SMF proceeds with the PDU Session establishment using the Alternative S-NSSAI. The SMF sends the Alternative S-NSSAI to NG-RAN in N2 SM information and to UE in PDU Session Establishment Accept message. | | | |
| For existing PDU Session associated with an S-NSSAI that is replaced with the Alternative S-NSSAI, after the AMF sends mapping of the S-NSSAI to the Alternative S-NSSAI to the supporting UE in UE Configuration Update message, the AMF sends updates to the SMF of the PDU Session, e.g. triggering Nsmf_PDUSession_UpdateSMContext service operation, that the PDU Session is to be transferred to Alternative S-NSSAI and includes the Alternative S-NSSAI as follows (see details in clause 4.3.5.x of TS 23.502 [3]): | | | |
| | - If the SMF determines that the PDU Session needs to be retained (e.g. if the anchor UPF can be reused with the alternative S-NSSAI and SSC mode 1), the SMF sends the Alternative S-NSSAI to the UPF in the N4 message, to the NG-RAN in N2 message and to the supporting UE in PDU Session Modification Command message. | | |
| | - If the SMF determines that the PDU Session needs to be re-established, the SMF sends the Alternative S-NSSAI to the supporting UE either in PDU Session Modification Command if the PDU Session is of SSC mode 3, or in PDU Session Release if the PDU Session is of SSC mode 2 or SSC mode 1, to trigger the re-establishment of the PDU Session. The UE includes both, the S-NSSAI and the Alternative S-NSSAI in the PDU Session Establishment message. | | |
| | Editor's note: How to use the existing NG-RAN resource of the replaced S-NSSAI is for FFS. | | |
| When the AMF is notified that the S-NSSAI is available again or the congestion of the S-NSSAI has been mitigated, if the AMF has configured the supporting UE with the Alternative S-NSSAI, and the AMF determines for the UE to use the S-NSSAI again, the AMF reconfigures the supporting UE (e.g. by using UE Configuration Update message) to use the S-NSSAI. If there is an existing PDU Session associated with the Alternative S-NSSAI, the AMF sends updates to the SMF of the PDU Session, e.g. triggering Nsmf_PDUSession_UpdateSMContext service operation, that the PDU Session is to be transferred to the S-NSSAI. | | | |
| | Editor's note: How to perform Network Slice Replacement during handover is FFS. | | |

As shown in [Table 2], the AMF receives the local configuration, a notification including an alternative S-NSSAI from PCF or NSSF, and determines the S-NSSAI to be replaced based on the received notification. At this time, the alternative S-NSSAI is supported within the current UE's registration area. The AMF provides the alternative S-NSSAI within the allowed network slice selection assistance information (NSSAI) or the configured NSSAI.

[Table 3] presents a partial network slice support scheme within the registration area, extracted from the CR of S2-2303809 related to KI#5.

**[Table 3]**

| | | | |
|---|---|---|---|
| 5.15.X Partial Network Slice support in a Registration Area | | | |
| A Network Slice may be supported in one or more TAs in a PLMN/SNPN. The Partial Network Slice support in a Registration Area for a UE includes configuring the UE with a Partially Allowed NSSAI and/or S-NSSAI(s) rejected partially in the RA. | | | |
| When creating a Registration Area for UEs registering over the 3GPP access and supporting the Partial Network Slice support in a Registration Area, the AMF may consider the trade-off between signalling for paging in TAs where the S-NSSAI is not supported versus the signalling for Mobility Registration Updates to register with the S-NSSAI in the TA(s) where the S-NSSAI is supported, so that the AMF may create a Registration Area including the TA(s) where a requested S-NSSAI is not supported. For such S-NSSAI: | | | |
| | - If requested by the UE from a TA where the S-NSSAI is not supported, | | |
| | | | - then the S-NSSAI is included either in the Partially Allowed NSSAI or the AMF rejects the S-NSSAI partially in the RA; or |
| | | | - if the S-NSSAI is subject to NSAC for maximum number of UEs, then the AMF should send this S-NSSAI as rejected partially in the RA. |
| | - If requested by the UE from a TA where the S-NSSAI is supported, | | |
| | | | - the S-NSSAI is included in the Partially Allowed NSSAI; or |
| | | | - if the S-NSSAI is subjected to NSAC for maximum number of UEs, then the AMF restricts the RA so that the S-NSSAI is supported in all the TAs of the RA and includes the S-NSSAI in the Allowed NSSAI. |
| | | Editor's Note: It is FFS whether further conditions or criteria can be specified how the AMF determines whether to include an S-NSSAI in the Allowed NSSAI, Partially Allowed NSSAI or reject the S-NSSAI partially in the RA (e.g. in case of on demand S-NSSAI). | |
| Whether the AMF for supporting UEs uses the Partially Allowed NSSAI or rejects the S-NSSAIs partially in the RA is a per S-NSSAI decision which is based on AMF local policy. If supported and allowed by local policy, the Partially Allowed NSSAI and S-NSSAIs rejected partially in the RA may be applied simultaneously for one UE for different S-NSSAIs. | | | |
| While the S-NSSAIs of the Allowed NSSAI are supported in all the TAs of the Registration Area, the S-NSSAIs of the Partially Allowed NSSAI are supported only in the TAs corresponding to the list of TAs (which are subset of the list of TAIs forming the Registration Area) associated with the S-NSSAI. | | | |
| If the UE supports Partial Network Slice support in a Registration Area, the AMF may create a Registration Area for the UE considering the support of the S-NSSAIs of the Requested NSSAI in the current TA and in the neighbouring TAs and provides to the UE in the Registration Accept message or in the UE Configuration Update Command message the Partially Allowed NSSAI or the S-NSSAIs rejected partially in the RA as follows: | | | |
| | - If one or more of the requested S-NSSAI(s) are supported in a subset of the TAs of the (potential) Registration Area, the AMF may include such S-NSSAI(s) in the Partially Allowed NSSAI and corresponding mapping information of the S-NSSAI(s) of the Partially Allowed NSSAI to the HPLMN S-NSSAI(s). For each S-NSSAI of the Partially Allowed NSSAI the AMF provides a list of TAs where the S-NSSAI is supported. The UE is considered registered with the S-NSSAI in the whole Registration area. The AMF also provides the Partially Allowed NSSAI (without indication of the TA list where the partially allowed S-NSSAIs are supported) to the NG-RAN together with the UE's context. | | |
| | - Alternatively, the AMF may reject the S-NSSAI(s) with reject cause indicating "partially in the RA". For each S-NSSAI of the S-NSSAIs rejected partially in the RA the AMF provides a list of TAs for which the S-NSSAI is supported or not supported. | | |
| | NOTE: If the UE requests an S-NSSAI in a cell of a TA where the NS-AoS of the S-NSSAI does not match deployed Tracking Areas (see clause 5.15.y), the AMF includes the S-NSSAI in the Allowed NSSAI or Partially Allowed NSSAI. | | |
| When the UE stores Partially Allowed NSSAI the following applies: | | | |
| | - the UE is considered registered with an S-NSSAI of the Partially Allowed NSSAI in the whole Registration area. The UE does not trigger registration when moving between the TAs of support and non-support for the S-NSSAI within the RA. | | |
| | - The UE is allowed to initiate PDU Session establishment for the S-NSSAI only when the UE is in a TA where the S-NSSAI is supported. | | |
| | - When the UE has already established a PDU Session with an S-NSSAI part of the Partially Allowed NSSAI, the UE is allowed to activate the User Plane Resources of the PDU Session only when the UE is in a TA part of the list of TAs associated with each S-NSSAI. | | |
| | - When the User Plane Resources are activated for a PDU Session to an S-NSSAI part of the Partially Allowed NSSAI and the UE moves to a TA which is not part of the list of TAs associated with the S-NSSAI, the User Plane Resources for the PDU Session shall be deactivated, but the PDU Session context in UE and SMF is not released. The User Plane Resources for the PDU Session shall not be activated as long as the UE is located in a TA which is not part of the list of TAs associated with the S-NSSAI of the Partially Allowed NSSAI. | | |
| When the UE stores a S-NSSAI rejected partially in the RA with the associated list of TAs, the UE is allowed to initiate a Mobility Registration Update procedure to request registration with the S-NSSAI only when the UE is in a TA supporting this S-NSSAI. | | | |

According to [Table 3], when the UE stores partially allowed NSSAI, it assumes that the UE is registered with one of the partially allowed S-NSSAIs within the entire registration area and activates user plane resources only within the TAs included in the TA list associated with that S-NSSAI. In other words, the UE is permitted to initiate PDU session establishment for that S-NSSAI only if the UE is present within the TA area associated with that S-NSSAI. If a PDU session already exists, the UE activates user plane resources only if the UE is present in a TA within the TA list associated with that S-NSSAI. Meanwhile, if the UE moves to a TA other than a TA listed for that S-NSSAI while the user plane resources are already activated, the user plane resources are deactivated, but the PDU session contexts of the UE and the SMF are not released. User plane resources for the PDU session are not activated while the UE is in a TA within the TA list associated with the S-NSSAI. When the UE stores partially rejected S-NSSAI in the registration area, the UE initiates a mobility registration update procedure to request registration with the S-NSSAI only if it is in a TA that supports the S-NSSAI.

[Table 4] presents the network slice support scheme extracted from the CR of S2-2303869.

**[Table 4]**

| | | |
|---|---|---|
| 5.15.y Support for Network Slices with Network Slice Area of Service not matching deployed Tracking Areas | | |
| 5.15.y.1 General | | |
| The network support for a Network Slice is defined on a per Tracking Area granularity. It may be beneficial to deploy some Network Slices such that the Network Slice have a limited geographical availability that is not matching existing Tracking Area boundaries. | | |
| The operator can in this case decide to change the topology of the Tracking Areas so they match the boundaries of the Network Slice, or the operator may configure resources for the Network Slices in the cells of TAs where the Network Slices are to be available, and in areas of the TAs where the network slice is defined to be not available the cells are configured with zero resources. | | |
| The AMF receives from the OAM the information on availability of a network slice when the granularity is smaller than TA, i.e. if the NS-AoS includes TAs where the network slice is not available in some cells of the TA. | | |
| In order to optimize the end-to-end behaviour, the AMF can, based on NS-AoS information received from OAM, configure supporting UEs with S-NSSAI location availability information, and the network may need to monitor the S-NSSAI usage and enforce the NS-AoS e.g. if the UE does not support the S-NSSAI location availability information. | | |
| 5.15.y.2 S-NSSAI location availability information | | |
| S-NSSAI location availability information defines additional restrictions to the usage of an S-NSSAI in TAs where the Network Slice availability does not match the TA boundaries. The AMF is configured per S-NSSAI whether to send the S-NSSAI location availability information to supporting UEs. | | |
| | Editor's note: It is FFS whether to enable a per UE differentiation of Network Slice availability. | |
| The S-NSSAI location availability information sent to the UE includes, for each applicable S-NSSAI of the Configured NSSAI, Location information indicating the cells of TAs in the RA where the related S-NSSAI is available if the S-NSSAI is not available in all the cells of the TA. | | |
| | Editor's note: The need for Registration level control is FFS e.g. requiring S-NSSAI to be deregistered when the UE move out of the Location. | |
| | Editor's note: How to steer the UE to the area of the Location information is FFS. | |
| If the UE has indicated that the UE supports S-NSSAI location availability information in the 5GMM Core Network Capability (see clause 5.4.4a), the AMF may, based on OAM configuration, configure the UE with S-NSSAI location availability information for one or more S-NSSAIs when the AMF allocates an RA where the Network Slice availability does not match whole TAs, by including the S-NSSAI location availability information in the Registration Accept message or the UE Configuration Command message. A UE that receives S-NSSAI location availability information applies the information as follows. | | |
| | | 1. If the S-NSSAI is rejected in the RA or rejected partially in the RA or rejected with a cause code that allows attempting to register the S-NSSAI again, the UE can request the S-NSSAI only if the S-NSSAI location availability information indicates that the S-NSSAI is available at the cell where the UE is camping. |
| | | 2. If the S-NSSAI is in the Partially Allowed NSSAI, the UE shall not activate User Plane for any already established PDU Session with that S-NSSAI if the UE is in a cell within the RA but outside the Location infonnation of the S-NSSAI. |
| | | 2. If the S-NSSAI is in the Partially Allowed NSSAI, and the UE in CM-IDLE mode is moved to a cell outside the Location information of the S-NSSAI, and the UE has an established PDU Session with that S-NSSAI, the PDU Session is kept. |
| | Editor's note: Logic for when the S-NSSAI is in the Allowed NSSAI is FFS. | |
| 5.15.y.3 Network based monitoring and enforcement of Network Slice Area of Service not matching deployed Tracking Areas | | |
| OAM may configure RRM policies for S-NSSAIs on a per cell basis as defined in TS 28.541 [y], i.e. cells outside the Network Slice Area of Service while in a TA supporting the S-NSSAI are allocated with no RRM resources for the S-NSSAI. | | |
| The network may enforce the NS-AoS for an S-NSSAI as follows: | | |
| | 1. The network monitors the validity of the S-NSSAI for UE in CM-CONNECTED state, i.e. as per the location. | |
| | Editor's note: The mechanism to use for monitoring the location and any NG-RAN logic is FFS and is dependent on the RAN3 reply. | |
| | 2. If the non-supporting UE makes a PDU Session establishment request with an S-NSSAI that is not valid as per the S-NSSAI location availability information, the AMF may reject the NAS Transport message with a back-off timer using S-NSSAI based congestion control as described in clause 5.19.7.4. | |
| | Editor's note: Whether the AMF or SMF rejecting the PDU Session establishment is FFS. | |
| | 3. If the AMF determines that the UE in CM-CONNECTED has moved outside the NS-AoS, the AMF performs the following logic: | |
| | | a) If the non-supporting UE has other S-NSSAI(s) in the Allowed NSSAI, then the AMF may update update the UE with a UE Configuration Update by removing the S-NSSAI from the Allowed NSSAI (which causes the UE to locally release the PDU Sessions) and removing the S-NSSAI from the Configured NSSAI, and then the AMF requests the SMF to locally release in the network any PDU Sessions with that S-NSSAI as per step If in clause 4.2.3.4 in TS 23.502 [3]. |
| | | b) If the non-supporting UE does not have any other S-NSSAI in the Allowed NSSAI, then the AMF may update update the UE with a UE Configuration Update by removing the S-NSSAI from the Allowed NSSAI (which causes the UE to locally release the PDU Sessions) and removing the S-NSSAI from the Configured NSSAI, and adding a default S-NSSAI to the Allowed NSSAI, and then the AMF requests the SMF to locally release in the network any PDU Sessions with the removed S-NSSAI as per step If in clause 4.2.3.4 in TS 23.502 [3]. |
| | | c) For a non-supporting UE that does not have any other S-NSSAI in the Allowed NSSAI nor in the Configured NSSAI, then the AMF indicates to the SMF to release the PDU Session. |
| | 4. If the AMF determines that the S-NSSAI becomes valid e.g. the UE has moved into the NS-AoS, the AMF updates the UE with a UCU e.g. including the S-NSSAI in the Configured NSSAI. | |
| | Editor's note: It is FFS whether it is suitable to remove the S-NSSAI from the Configured NSSAI/Allowed NSSAI or whether to release the PDU Session when the non-supporting UE is outside the NS-AoS. | |

Referring to [Table 4], if the deployed TA and the network slice-enabled area are different, operations, administration and management (OAM) may configure whether to support the network slice on a cell-by-cell basis. A network slice area of service (NS-AoS) is an area in an NG-RAN cell where zero or more resources are allocated to a network slice, allowing the UE to access and receive services from that network slice. If a cause code permitting re-registration and a rejection for the S-NSSAI are received, and the S-NSSAI is available in the cell where the UE camped, the UE requests the S-NSSAI only if it has received S-NSSAI location availability information. If the S-NSSAI is partially allowed NSSAI and the UE is within the RA but outside the area corresponding to the S-NSSAI location availability information, the UE does not activate the user plane of the PDU session for the S-NSSAI. If the S-NSSAI is partially allowed NSSAI and the UE in idle mode moves to a cell outside the area corresponding to the S-NSSAI location availability information, the UE maintains the PDU session.

Notably, in KI#1, continuity of the PDU session may not be provided due to overload control in the NG-RAN in inter-RA mobility scenarios or no mobility scenarios. Accordingly, handling of PDU sessions in NG-RAN has been discussed in TR 38.832.

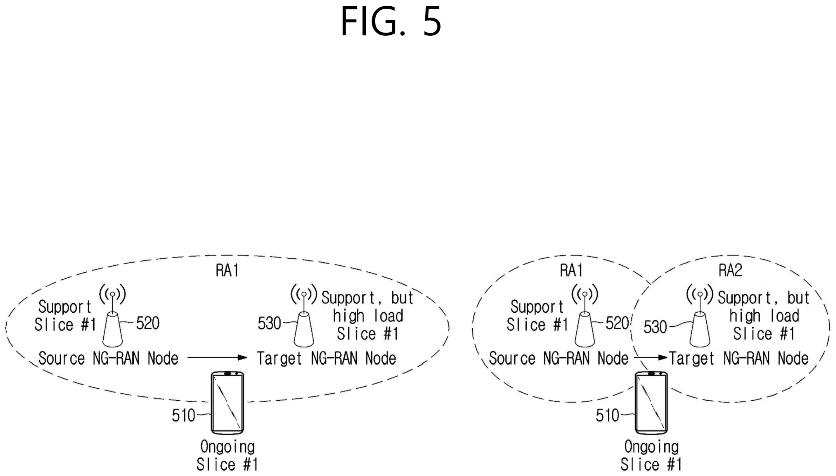

FIG. 5 illustrates a case where service continuity is not guaranteed due to a lack of slice resources applicable to the present disclosure. Referring to FIG. 5, a UE (510) may attempt a handover from a source RAN node (520) to a target RAN node (530). At this time, although the target RAN node (530) supports the slice used by the UE (510), the target RAN node (530) may not be able to use the slice due to overload. In this case, the UE (510) may not be able to successfully perform a slice-based handover to the target RAN node (530), resulting in service interruption.

According to the current eNS_Ph3 (enhancement of network slicing phase 3) WID (world inequality database), the UE does not release the corresponding PDU session even if a congestion situation occurs. That is, when a congestion situation occurs, the UE transmits the PDU session through another available S-NSSAI instead of the S-NSSAI that caused the congestion, and when the congestion situation is resolved, the PDU session is transmitted through the previously used S-NSSAI, thereby transmitting the UE's user data. This is to ensure service continuity of the PDU session when a congestion situation occurs. To this end, the 3GPP technical specification group core network and UEs (TSG CT) working group (WG) defined an alternative S-NSSAI. The alternative S-NSSAI is configured through the registration procedure and the UE configuration update procedure as described above. Additionally, when a PDU session is established or modified, the PDU session may be created and/or modified through one of the newly allocated alternative S-NSSAIs, and user data may be transmitted through the corresponding PDU session.

Furthermore, referring to the eNS_Ph3 WID, a method for processing a specific S-NSSAI even if the specific S-NSSAI is not supported by a specific TA in the TA list within the registration area is proposed. According to the conventional standard, a registration area is defined to facilitate mobility management and paging management of the UE in AMF, and for this purpose, if the S-NSSAI requested by the UE supports the TA list of the registration area associated with the S-NSSAI, i.e., all TAs deployed in the registration area, the S-NSSAI is determined to correspond to the registration area. That is, according to the conventional standard, even if the S-NSSAI cannot be handled only in the location of a specific TA among the registration area, the S-NSSAI is rejected. However, according to KI#5, the registration area is managed based on partially allowed NSSAI that is possible only in the area of a specific TA or partially rejected NSSAI that is rejected only in the area of a specific TA among the TA list including TAs within one registration area.

As mentioned above, new concepts, terminology, and procedures are being studied to address key issues, such as alternative S-NSSAI to address KI#1, partially allowed NSSAI and partially rejected S-NSSAI to address KI#5. New standardization efforts are underway.

However, there is no discussion on issues arising from procedures utilizing alternative S-NSSAI, partially allowed NSSAI, and/or partially rejected NSSAI, and on handling abnormal cases.

In other words, when a PDU session is transmitted using an alternative S-NSSAI, if the TAI of the UE is changed to a TAI that does not support the service, or the UE's cell changes to a cell that does not support the service, preventing the PDU session from being processed, a method for handling the ongoing PDU session needs to be discussed. For example, methods for handling PDU session establishment procedures, PDU session modification procedures, and UL/DL NAS transport procedures for sending and receiving 5GS Session Management (5GSM) messages are needed.

Accordingly, the present disclosure defines error situations that may occur in procedures related to newly defined alternative S-NSSAI, partially allowed NSSAI, and partially rejected NSSAI, and proposes a method to resolve them.

Specifically, the present disclosure proposes a method for processing UL NAS transport messages when transmission of a UL NAS transport message fails due to a change in the TA of the UE to a TA that belongs to a registration area but does not support S-NSSAI. In this case, S-NSSAI refers to the S-NSSAI included in the UL NAS transport message or the S-NSSAI associated with the UL NAS transport message. In other words, when the UE transmits a UL NAS transport message to the network, if the UE leaves the registration area and moves to a new TA, the transmission of the UL NAS transport message may fail. In this case, the existing UE determines whether to abort the NAS transport procedure initiated by the UE or re-execute the ongoing NAS transport procedure based solely on whether the new TA belongs to the registration area. For example, if the TAI of the new TA is included in the TAI list of the registration area, the existing UE re-executes the ongoing procedure that triggered the NAS transport procedure initiated by the UE, depending on the UE's implementation. Conversely, if the TAI of the new TA is not included in the TAI list of the registration area, the existing UE aborts the NAS transport procedure and initiates a registration procedure for mobility and periodic registration update.

However, the UE of the present disclosure does not determine the processing of the NAS transport procedure solely based on the registration area, but additionally considers at least one of whether the new TA supports S-NSSAI or lower layer reports related to S-NSSAI to determine the processing of the NAS transport procedure. For example, if the new TA does not support the S-NSSAI associated with the failed UL NAS transport message, the UE aborts the processing of the UL NAS transport message. Alternatively, if the AS layer notifies the NAS layer that the new cell may not process the S-NSSAI associated with the UL NAS transport message, the UE aborts the processing of the UL NAS transport message. At this time, the UE may report the transmission failure of the UL NAS transport message and the cause of the transmission failure to the network.

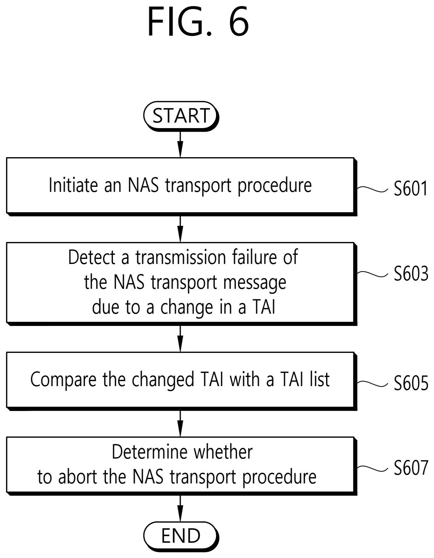

FIG. 6 illustrates an example of an NAS message processing procedure according to an embodiment of the present disclosure. FIG. 6 shows a method performed by a UE.

Referring to FIG. 6, in step S601, the UE initiates an NAS transport procedure. The UE initiates the NAS transport procedure to transmit a single 5GSM message, a short message service (SMS), an LTE positioning protocol (LPP) message, a sidelink positioning protocol (SLPP) message, a steering of roaming (SOR) transparent container, a UE policy container, a UE parameter update transparent container, a location service message, a cellular internet of things (CIoT) user data container, a service-level-AA (SLA) container, or a user plane positioning connection management information (UPP-CMI) container. According to an embodiment, the UE may initiate the NAS transport procedure by transmitting an UL NAS transport message to the AMF in connected mode. The UE may use the UL NAS transport message to transmit control plane user data to the network.

In step S603, the UE detects a transmission failure of the NAS transport message due to a change in a TAI. In other words, the UE detects that the transmission of the UL NAS transport message has failed due to the UE 's current TA being changed to a new TA.

In step S605, the UE compares the changed TAI with a TAI list. That is, the UE compares the changed TAI with the TAI list indicating the TAs within the UE's registration area. In other words, by comparing the changed TAI with the TAI list, the UE determines whether the changed TAI exists in the TAI list.

In step S607, the UE determines whether to abort the NAS transport procedure. In other words, the UE determines whether to abort the NAS transport procedure based on whether the changed TAI exists in the TAI list. If the changed TAI does not exist in the TAI list, the UE may determine to abort the NAS transport procedure. Conversely, if the changed TAI exists in the TAI list, the UE may determine to abort or re-execute the UL NAS transport procedure based on whether the aforementioned conditions are met. According to an embodiment, the UE may determine processing for the NAS transport procedure by further considering at least one of whether the new TA is a TA that supports S-NSSAI or a report from a lower layer related to S-NSSAI.

In the present disclosure, specific embodiments of how a UE processes a UL NAS transport message when transmission of the UL NAS transport message fails are described below.

### Implementation 1

If transmission of a UL NAS transport message fails due to a change in the TAI of the UE, the UE determines whether the changed current TAI is included in a TAI list indicating TAIs within the UE's registration area. Additionally, the UE considers whether the following conditions are met to abort or re-execute processing of the UL NAS transport message.
Condition 1: When the UE supports partial network slice.
Condition 2: When the S-NSSAI included in the UL NAS transport message is included in partially allowed S-NSSAI or partially rejected S-NSSAI.
Condition 3: When the current TAI is not in the TA list that support the S-NSSAI included in the UL NAS transport message.

If the aforementioned conditions are met, the UE determines that the UL NAS transport message cannot be processed with the current TAI and aborts processing of the UL NAS transport message.

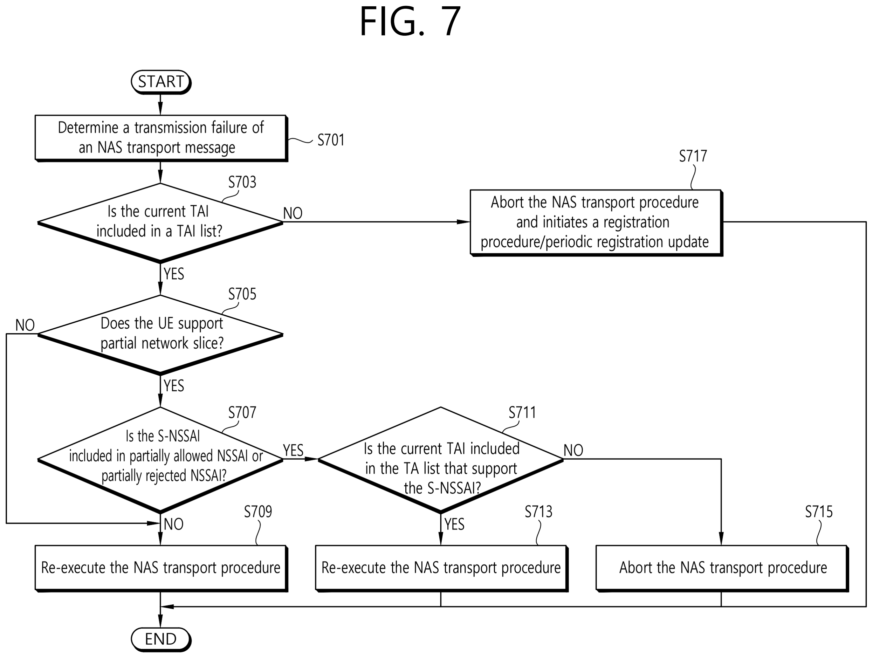

FIG. 7 illustrates a specific procedure for processing an NAS message based on specified conditions according to an embodiment of the present disclosure. FIG. 7 shows a method performed by a UE. At least some of the operations in FIG. 7 may be understood as specific embodiments of steps S603, S605, and S607 of FIG. 6.

Referring to FIG. 7, in step S701, the UE determines a transmission failure of an NAS transport message. In other words, the UE detects a transmission failure of a UL NAS transport message due to a change in the current TAI.

In step S703, the UE determines whether the current TAI is included in a TAI list. The TAI list includes TAIs corresponding to TAs included in the UE's registration area, and the current TAI may be a TAI corresponding to a TA changed due to the UE's movement.

If the current TAI is not included in the TAI list, in step S717, the UE aborts the NAS transport procedure and initiates a registration procedure and periodic registration update. That is, the UE may abort the UE-initiated NAS transport procedure and initiate the registration procedure for mobility and periodic registration update. The UL NAS transport message may be transmitted as needed after the procedures for mobility and periodic registration update are successfully completed.

If the current TAI is included in the TAI list, in step S705, the UE determines whether the UE supports partial network slice. For example, the UE may determine whether the UE supports partial network slice based on pre-configured capability information.

If the UE supports partial network slice, in step S707, the UE determines whether the S-NSSAI is included in partially allowed NSSAI or partially rejected NSSAI. Specifically, the UE determines whether the S-NSSAI included in the UL NAS transport message is included in partially allowed NSSAI or partially rejected NSSAI. According to an embodiment, the partially allowed NSSAI or the partially rejected NSSAI may be obtained via a registration accept message or a UE configuration update command message received from the network.

If the UE does not support partial network slice, or if the UE supports partial network slice but the S-NSSAI is not included in the partially allowed NSSAI or partially rejected NSSAI, in step S709, the UE re-executes the NAS transport procedure. For example, the UE may re-execute an ongoing procedure, i.e., a procedure that triggered the NAS transport procedure initiated by the UE. The method for re-executing the ongoing procedure may be determined depending on the implementation of the UE.

If the UE supports partial network slice and the S-NSSAI is included in the partially allowed NSSAI or partially rejected NSSAI, in step S711, the UE determines whether the current TAI is included in the TA list that support the S-NSSAI. The TA list supporting S-NSSAI may include TAIs supporting S-NSSAI included in the UL NAS transport message.

If the current TAI is included in the TA list supporting S-NSSAI, in step S713, the UE re-executes the NAS transport procedure. For example, the UE may re-execute an ongoing procedure, i.e., a procedure that triggered the NAS transport procedure initiated by the UE. The method for re-executing the ongoing procedure may vary depending on the implementation of the UE.

If the current TAI is not included in the TA list supporting S-NSSAI, in step S715, the UE aborts the NAS transport procedure. At this time, the UE does not initiate the registration procedure or periodic registration update. In other words, the UE may abort the UE-initiated NAS transport procedure and control the registration procedure for mobility and periodic registration update not to be initiated.

The processing procedure for the NAS transport procedure of the UE described with reference to FIG. 7 may be defined as shown in [Table 5].

**[Table 5]**

| | | | |
|---|---|---|---|
| 5.4.5.2.6 Abnormal cases in the **UE** | | | |
| The following abnormal cases can be identified: | | | |
| | a) The lower layers indicate that the access attempt is barred. The UE shall not start the UE-initiated NAS transport procedure. The UE stays in the current serving cell and applies the normal cell reselection process. | | |
| | | If the access category for the access attempt is 6 due to a request from upper layers to send a mobile originated SMS over NAS and the UE is registered to the network via both 3GPP access and non-3GPP access, the UE may transmit the UL NAS TRANSPORT message via non-3GPP access, if available. | |
| | | Otherwise, the UE-initiated NAS transport procedure is started, if still needed, when the lower layers indicate that the barring is alleviated for the access category with which the access attempt was associated. | |
| | aa) The lower layers indicate that: | | |
| | | 1) access barring is applicable for all access categories except categories 0 and 2 and the access category with which the access attempt was associated is other than 0 and 2; or | |
| | | 2) access barring is applicable for all access categories except category 0 and the access category with which the access attempt was associated is other than 0. | |
| | | The UE shall proceed as specified for case a. For additional UE requirements see subclause 4.5.5. | |
| | b) If the Payload container type IE is set to "N1 SM information", the Request type IE is set to "initial request" or "MA PDU request" and registration procedure for mobility and periodic registration update is pending due to receipt by the UE of new network slicing information via the generic UE configuration update procedure with re-registration request; and an emergency PDU session exists then: | | |
| | | 1) The UE shall not send the UL NAS TRANSPORT message; and | |
| | | 2) The UL NAS TRANSPORT message can be sent, if still necessary, after a successful procedure for mobility and periodic registration update. | |
| | c) Transmission failure of the UL NAS TRANSPORT message with change in the current TAI. | | |
| | | If the current TAI is not in the TAI list, the UE-initiated NAS transport procedure shall be aborted and a registration procedure for mobility and periodic registration update shall be initiated. The UL NAS TRANSPORT message can be sent, if still necessary, after a successful procedure for mobility and periodic registration update. | |
| | | If the current TAI is still part of the TAI list and the UE does not support partial network slice, it is up to the UE implementation how to re-run the ongoing procedure that triggered the UE-initiated NAS transport procedure. | |
| | | If the current TAI is still part of the TAI list and the UE supports partial network slice and if the S-NSSAI. which is included in the UL NAS TRANSPORT message, is not included in the partially allowed NSSAI or the partially rejected NSSAI, it is up to the UE implementation how to re-run the ongoing procedure that triggered the UE-initiated NAS transport procedure. | |
| | | If the current TAI is still part of the TAI list and the UE supports partial network slice and if the S-NSSAI. which is included in the UL NAS TRANSPORT message, is included in the partially allowed NSSAI or the partially rejected NSSAI and the current TAI is in the list of TAs for which the S-NSSAI is supported, it is up to the UE implementation how to re-run the ongoing procedure that triggered the UE-initiated NAS transport procedure | |
| | | If the current TAI is still part of the TAI list and the UE supports partial network slice and if the S-NSSAI. which is included in the UL NAS TRANSPORT message, is included in the partially allowed NSSAI or the partially rejected NSSAI and the current TAI is NOT in the list of TAs for which the S-NSSAI is supported, the UE-initiated NAS transport procedure shall be aborted and a registration procedure for mobility and periodic registration update shall NOT be initiated.d) Transmission failure of the UL NAS TRANSPORT message indication without change in the current TAI. | |
| | | It is up to the UE implementation how to re-run the ongoing procedure that triggered the UE-initiated NAS transport procedure. | |
| e) Void. | | | |
| f) Timer T3447 is running. | | | |
| | The UE shall not send the UL NAS TRANSPORT message unless: | | |
| | 1) the Payload container type IE is set to "N1 SM information" and: | | |
| | | i) the Request type IE is set to: | |
| | | | A) "initial emergency request"; |
| | | | B) "existing emergency PDU session"; or |
| | | | C) "modification request" and the PDU session being modified is an emergency PDU session (see error cases described in subclause 6.4.1.3 and subclause 6.3.2.3); or |
| | | ii) the Request type IE is not included and the PDU session modification procedure is used to indicate a change of 3GPP PS data off UE status for a PDU session; | |
| | 2) the UE is a UE configured for high priority access in selected PLMN; | | |
| | 3) a paging request triggered the establishment of the current NAS signalling connection; or | | |
| | 4) the UE in 5GMM-CONNECTED mode receives mobile terminated signalling or downlink data over the user-plane. | | |
| | The UL NAS TRANSPORT message can be sent, if still necessary, when timer T3447 expires or timer T3447 is stopped. | | |
| g) The lower layers indicate that the RRC connection has been suspended. The UE shall abort the UE-initiated NAS transport procedure. | | | |
| h) Timer T3346 is running. | | | |
| | The UE shall not send the UL NAS TRANSPORT message unless: | | |
| | 1) the Payload container type IE is set to "N1 SM information" and: | | |
| | | i) the Request type IE is set to: | |
| | | | A) "initial emergency request"; |
| | | | B) "existing emergency PDU session"; or |
| | | | C) "modification request" and the PDU session being modified is an emergency PDU session; |
| | | | or |
| | | ii) the Request type IE is not included and the PDU session modification procedure is used to indicate a change of 3GPP PS data off UE status for a PDU session; or | |
| | 2) the UE is a UE configured for high priority access in selected PLMN or SNPN. | | |
| | The UL NAS TRANSPORT message can be sent, if still necessary, when timer T3346 expires. | | |
| i) NAS MAC calculation indication from lower layers. | | | |
| | If lower layers indicate to calculate an NAS MAC, the UE shall calculate an NAS MAC as specified in 3GPP TS 33.501 [24] and then provide the calculated NAS MAC and 5 least significant bits of the uplink NAS COUNT used to calculate the NAS MAC to lower layers (see 3GPP TS 36.331 [25A]). The UE shall increase the uplink NAS COUNT by one after the calculation of the NAS MAC. | | |

### Implementation 2

The UE detects a transmission failure of a UL NAS transport message through a lower layer report and aborts the UL NAS transport procedure. Specifically, if transmission of the NAS transport message fails due to a TA change or regardless of the TA change, the NAS layer of the UE may obtain a report related to the S-NSSAI from the AS layer. The report related to the S-NSSAI may indicate the cause of transmission failure of the UL NAS transport message. In other words, the AS layer of the UE may transmit information to the NAS layer indicating that the changed cell does not support the S-NSSAI included in the UL NAS transport message. At this time, the NAS layer of the UE may determine that the ongoing procedure cannot be continued through the changed cell and aborts the UL NAS transport procedure. Subsequently, the UE may report the cause of transmission failure of the UL NAS transport message to the network.

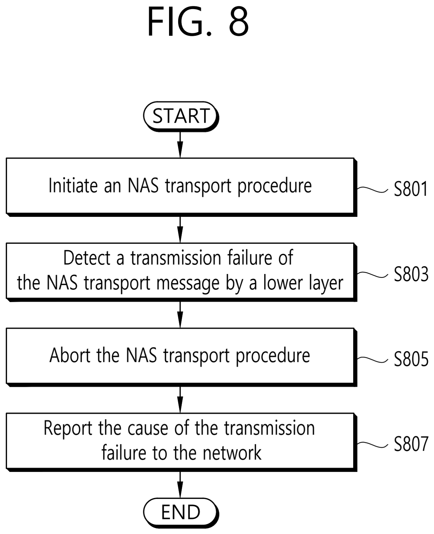

FIG. 8 illustrates an example of a procedure for processing an NAS message via lower layer report according to an embodiment of the present disclosure. FIG. 8 shows a method performed by the UE.

Referring to FIG. 8, in step S801, the UE initiates an NAS transport procedure. The UE initiates the NAS transport procedure to transmit a single 5GSM message, a short message service (SMS), an LTE positioning protocol (LPP) message, a sidelink positioning protocol (SLPP) message, a steering of roaming (SOR) transparent container, a UE policy container, a UE parameter update transparent container, a location service message, a cellular internet of things (CIoT) user data container, a service-level-AA (SLA) container, or a user plane positioning connection management information (UPP-CMI) container. According to an embodiment, the UE may initiate the NAS transport procedure by transmitting an UL NAS transport message to the AMF in connected mode. The UE may use the UL NAS transport message to transmit control plane user data to the network.

In step S803, the UE detects a transmission failure of the NAS transport message by a lower layer. In other words, the NAS layer of the UE may obtain information indicating the cause of the transmission failure of the UL NAS transport message from the lower layer, the AS layer, and detect a transmission failure of the NAS transport based on the obtained information. The information indicating the cause of the transmission failure of the UL NAS transport message may indicate that the changed cell, i.e., the current serving cell, does not support the S-NSSAI included in the UL NAS transport message.

In step S805, the UE aborts the NAS transport procedure. In other words, the UE may abort the processing of the UE-initiated NAS transport procedure. That is, the UE may determine that the ongoing procedure, i.e., the procedure that triggered the NAS transport procedure, cannot be continued through the current serving cell and may abort the NAS transport procedure.

In step S807, the UE reports the cause of the transmission failure to the network. That is, the UE may report the cause of transmission failure of the UL NAS transport message to the network. For example, the UE may report that transmission of the UL NAS transport message including the S-NSSAI failed because the changed cell does not support the S-NSSAI included in the UL NAS transport message.

The processing procedure for the NAS transport procedure of the UE described with reference to FIG. 8 may be defined as shown in [Table 6].

**[Table 6]**

| | | | | |
|---|---|---|---|---|
| 5.4.5.2.6 Abnormal cases in the UE | | | | |
| The following abnormal cases can be identified: | | | | |
| | a) The lower layers indicate that the access attempt is barred. | | | |
| | | The UE shall not start the UE-initiated NAS transport procedure. The UE stays in the current serving cell and applies the normal cell reselection process. | | |
| | | If the access category for the access attempt is 6 due to a request from upper layers to send a mobile originated SMS over NAS and the UE is registered to the network via both 3GPP access and non-3GPP access, the UE may transmit the UL NAS TRANSPORT message via non-3GPP access, if available. | | |
| | | Otherwise, the UE-initiated NAS transport procedure is started, if still needed, when the lower layers indicate that the barring is alleviated for the access category with which the access attempt was associated. | | |
| | aa) The lower layers indicate that: | | | |
| | | 1) access barring is applicable for all access categories except categories 0 and 2 and the access category with which the access attempt was associated is other than 0 and 2; or | | |
| | | 2) access barring is applicable for all access categories except category 0 and the access category with which the access attempt was associated is other than 0. | | |
| | | The UE shall proceed as specified for case a. For additional UE requirements see subclause 4.5.5. | | |
| | a1) The lower layers indicate that the current serving cell does not support the S-NSSAI which is included in UL NAS TRANSPORT message. | | | |
| | | the UE-initiated NAS transport procedure shall be aborted.b) If the Payload container type IE is set to "N1 SM infonnation", the Request type IE is set to "initial request" or "MA PDU request" and registration procedure for mobility and periodic registration update is pending due to receipt by the UE of new network slicing information via the generic UE configuration update procedure with re-registration request; and an emergency PDU session exists then: | | |
| | | 1) The UE shall not send the UL NAS TRANSPORT message; and | | |
| | | 2) The UL NAS TRANSPORT message can be sent, if still necessary, after a successful procedure for mobility and periodic registration update. | | |
| | c) Transmission failure of the UL NAS TRANSPORT message with change in the current TAI. If the current TAI is not in the TAI list, the UE-initiated NAS transport procedure shall be aborted and a registration procedure for mobility and periodic registration update shall be initiated. The UL NAS TRANSPORT message can be sent, if still necessary, after a successful procedure for mobility and periodic registration update. | | | |
| | | If the current TAI is still part of the TAI list, it is up to the UE implementation how to re-run the ongoing procedure that triggered the UE-initiated NAS transport procedure. | | |
| | d) Transmission failure of the UL NAS TRANSPORT message indication without change in the current TAI. | | | |
| | | It is up to the UE implementation how to re-run the ongoing procedure that triggered the UE-initiated NAS transport procedure. | | |
| | e) Void. | | | |
| | f) Timer T3447 is running. | | | |
| | | The UE shall not send the UL NAS TRANSPORT message unless: | | |
| | | 1) the Payload container type IE is set to "N1 SM information" and: | | |
| | | | i) the Request type IE is set to: | |
| | | | | A) "initial emergency request"; |
| | | | | B) "existing emergency PDU session"; or |
| | | | | C) "modification request" and the PDU session being modified is an emergency PDU session (see error cases described in subclause 6.4.1.3 and subclause 6.3.2.3); or |
| | | | ii) the Request type IE is not included and the PDU session modification procedure is used to indicate a change of 3GPP PS data off UE status for a PDU session; | |
| | | 2) the UE is a UE configured for high priority access in selected PLMN; | | |
| | | 3) a paging request triggered the establishment of the current NAS signalling connection; or | | |
| | | 4) the UE in 5GMM-CONNECTED mode receives mobile terminated signalling or downlink data over the user-plane. | | |
| | | The UL NAS TRANSPORT message can be sent, if still necessary, when timer T3447 expires or timer T3447 is stopped. | | |
| g) The lower layers indicate that the RRC connection has been suspended. | | | | |
| | The UE shall abort the UE-initiated NAS transport procedure. | | | |
| h) Timer T3346 is running. | | | | |
| | The UE shall not send the UL NAS TRANSPORT message unless: | | | |
| | 1) the Payload container type IE is set to "N1 SM information" and: | | | |
| | | i) the Request type IE is set to: | | |
| | | | A) "initial emergency request"; | |
| | | | B) "existing emergency PDU session"; or | |
| | | | C) "modification request" and the PDU session being modified is an emergency PDU session; | |
| | | | or | |
| | | ii) the Request type IE is not included and the PDU session modification procedure is used to indicate a change of 3GPP PS data off UE status for a PDU session; or | | |
| | 2) the UE is a UE configured for high priority access in selected PLMN or SNPN. | | | |
| | The UL NAS TRANSPORT message can be sent, if still necessary, when timer T3346 expires. | | | |
| i) NAS MAC calculation indication from lower layers. | | | | |
| | If lower layers indicate to calculate an NAS MAC, the UE shall calculate an NAS MAC as specified in 3GPP TS 33.501 [24] and then provide the calculated NAS MAC and 5 least significant bits of the uplink NAS COUNT used to calculate the NAS MAC to lower layers (see 3GPP TS 36.331 [25A]). The UE shall increase the uplink NAS COUNT by one after the calculation of the NAS MAC. | | | |

### Implementation 3

If transmission of a UL NAS transport message fails due to a TAI change, the UE aborts or re-executes processing of the UL NAS transport message based on whether the S-NSSAI included in the UL NAS transport message is included in an IE of an alternative NSSAI for PDU session continuity and whether the changed TAI supports the alternative S-NSSAI. For example, if the S-NSSAI included in the UL NAS transport message is included in an IE of an alternative NSSAI for PDU session continuity and the changed TAI does not support the alternative S-NSSAI included in the UL NAS transport message, the UE may determine that the ongoing procedure cannot be continued and may abort the UL NAS transport procedure.

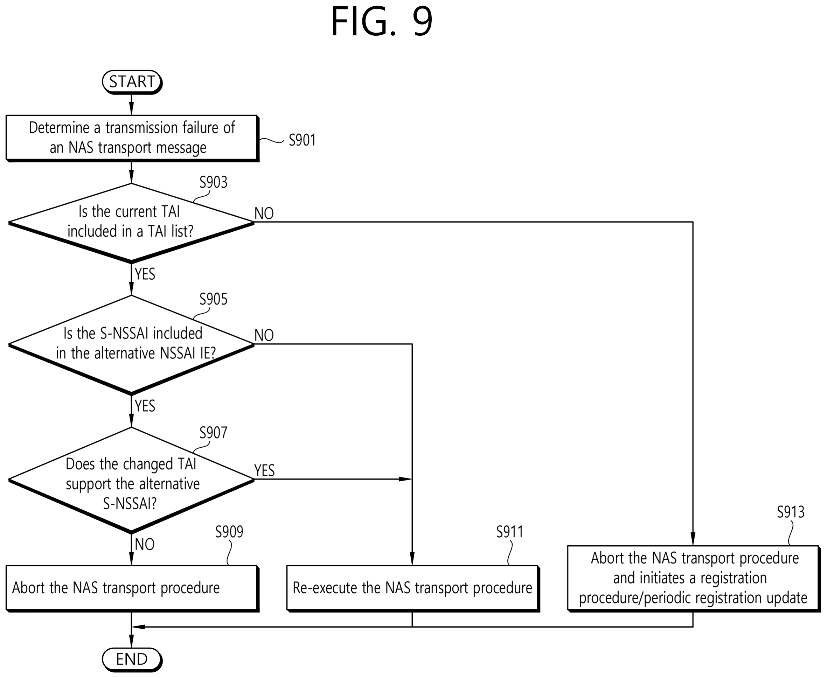

FIG. 9 illustrates an example of a procedure for processing an NAS message based on an alternate S-NSSAI according to an embodiment of the present disclosure. FIG. 9 shows a method performed by the UE.

Referring to FIG. 9, in step S901, the UE determines a transmission failure of the NAS transport message. In other words, the UE detects that the transmission of the UL NAS transport message has failed due to a change in the current TAI.

In step S903, the UE determines whether the current TAI is included in the TAI list. The TAI list includes TAIs corresponding to TAs within the UE's registration area, and the current TAI may correspond to a TA that has changed due to the UE's movement.

If the current TAI is not included in the TAI list, in step S913, the UE aborts the NAS transport procedure and initiates the registration procedure and periodic registration update. In other words, the UE may abort the UE-initiated NAS transport procedure and initiate the registration procedure for mobility and periodic registration update. The UL NAS transport message may be transmitted as needed after the mobility and periodic registration update procedures have been successfully completed.

If the current TAI is included in the TAI list, in step S905, the UE determines whether the S-NSSAI is included in the alternative NSSAI IE. The S-NSSAI refers to the S-NSSAI included in the failed UL NAS transport message or the S-NSSAI associated with the failed UL NAS transport message. In other words, the UE determines whether the failed UL NAS transport message includes an alternative S-NSSAI. The NSSAI IE may be configured through a previously performed registration procedure and/or UE configuration update procedure.

If the S-NSSAI is not included in the alternative NSSAI IE, in step S911, the UE re-executes the NAS transport procedure. In other words, if the failed UL NAS transport message does not include the alternative S-NSSAI, the UE may re-execute the ongoing procedure, i.e., the ongoing procedure that triggered the NAS transport procedure initiated by the UE, depending on the implementation of the UE.

If the S-NSSAI is included in the alternative NSSAI IE, in step S907, the UE determines whether the changed TAI supports the alternative S-NSSAI. The UE may determine whether the changed TAI supports the alternative S-NSSAI by determining whether the changed TA is included in the TA list indicating TAs that support the alternative S-NSSAI. If the changed TA is included in the TA list indicating TAs that support the alternative S-NSSAI, the UE determines that the changed TAI supports the alternative S-NSSAI. Conversely, if the changed TA is not included in the TA list indicating TAs that support the alternative S-NSSAI, the UE determines that the changed TAI does not support the alternative S-NSSAI.

If the changed TALI supports the alternative S-NSSAI, in step S911, the UE re-executes the NAS transport procedure. For example, the UE may re-execute an ongoing procedure, i.e., a procedure that triggered the NAS transport procedure initiated by the UE. The method for re-executing the ongoing procedure may vary depending on the implementation of the UE.

If the changed TAI does not support the alternative S-NSSAI, in step S909, the UE aborts the NAS transport procedure. At this time, the UE does not initiate the registration procedure or periodic registration update. In other words, the UE may abort the UE-initiated NAS transport procedure and control the registration procedure for mobility and periodic registration update not to be initiated.

The processing procedure for the NAS transport procedure of the UE described with reference to FIG. 9 may be defined as shown in [Table 7].

**[Table 7]**

| | | | | |
|---|---|---|---|---|
| 5.4.5.2.6 Abnormal cases in the UE | | | | |
| The following abnormal cases can be identified: | | | | |
| | a) The lower layers indicate that the access attempt is barred. | | | |
| | | The UE shall not start the UE-initiated NAS transport procedure. The UE stays in the current serving cell and applies the normal cell reselection process. | | |
| | | If the access category for the access attempt is 6 due to a request from upper layers to send a mobile originated SMS over NAS and the UE is registered to the network via both 3GPP access and non-3GPP access, the UE may transmit the UL NAS TRANSPORT message via non-3GPP access, if available. | | |
| | | Otherwise, the UE-initiated NAS transport procedure is started, if still needed, when the lower layers indicate that the barring is alleviated for the access category with which the access attempt was associated. | | |
| | aa) The lower layers indicate that: | | | |
| | | 1) access barring is applicable for all access categories except categories 0 and 2 and the access category with which the access attempt was associated is other than 0 and 2; or | | |
| | | 2) access barring is applicable for all access categories except category 0 and the access category with which the access attempt was associated is other than 0. | | |
| | | The UE shall proceed as specified for case a. For additional UE requirements see subclause 4.5.5. | | |
| | b) If the Payload container type IE is set to "NI SM information", the Request type IE is set to "initial request" or "MA PDU request" and registration procedure for mobility and periodic registration update is pending due to receipt by the UE of new network slicing information via the generic UE configuration update procedure with re-registration request; and an emergency PDU session exists then: | | | |
| | | 1) The UE shall not send the UL NAS TRANSPORT message; and | | |
| | | 2) The UL NAS TRANSPORT message can be sent, if still necessary, after a successful procedure for mobility and periodic registration update. | | |
| | c) Transmission failure of the UL NAS TRANSPORT message with change in the current TAI. If the current TAI is not in the TAI list, the UE-initiated NAS transport procedure shall be aborted and a registration procedure for mobility and periodic registration update shall be initiated. The UL NAS TRANSPORT message can be sent, if still necessary, after a successful procedure for mobility and periodic registration update. | | | |
| | | If the current TAI is still part of the TAI list and an Alternative S-NSSAI IE is included in the UL NAS TRANSPORT message and the current TAI is NOT in the list of TAs for which the Alternative S-NSSAI is supported, the UE-initiated NAS transport procedure shall be aborted and a registration procedure for mobilitv and periodic registration update shall NOT be initiated. | | |
| | | If the current TAI is still part of the TAI list and an Alternative S-NSSAI IE is NOT included in the UL NAS TRANSPORT message it is up to the UE implementation how to re-run the ongoing procedure that triggered the UE-initiated NAS transport procedure. | | |
| | d) Transmission failure of the UL NAS TRANSPORT message indication without change in the current TAI. | | | |
| | | It is up to the UE implementation how to re-run the ongoing procedure that triggered the UE-initiated NAS transport procedure. | | |
| | e) Void. | | | |
| | f) Timer T3447 is running. | | | |
| | | The UE shall not send the UL NAS TRANSPORT message unless: | | |
| | | 1) the Payload container type IE is set to "N1 SM information" and: | | |
| | | | i) the Request type IE is set to: | |
| | | | | A) "initial emergency request"; |
| | | | | B) "existing emergency PDU session"; or |
| | | | | C) "modification request" and the PDU session being modified is an emergency PDU session (see error cases described in subclause 6.4.1.3 and subclause 6.3.2.3); or |
| | | | ii) the Request type IE is not included and the PDU session modification procedure is used to indicate a change of 3GPP PS data off UE status for a PDU session; | |
| | 2) the UE is a UE configured for high priority access in selected PLMN; | | | |
| | 3) a paging request triggered the establishment of the current NAS signalling connection; or | | | |
| | 4) the UE in SGMM-CONNECTED mode receives mobile terminated signalling or downlink data over the user-plane. | | | |
| | The UL NAS TRANSPORT message can be sent, if still necessary, when timer T3447 expires or timer T3447 is stopped. | | | |
| g) The lower layers indicate that the RRC connection has been suspended. | | | | |
| | The UE shall abort the UE-initiated NAS transport procedure. | | | |
| h) Timer T3346 is running. | | | | |
| | The UE shall not send the UL NAS TRANSPORT message unless: | | | |
| | 1) the Payload container type IE is set to "N1 SM information" and: | | | |
| | | i) the Request type IE is set to: | | |
| | | | A) "initial emergency request"; | |
| | | | B) "existing emergency PDU session"; or | |
| | | | C) "modification request" and the PDU session being modified is an emergency PDU session; or | |
| | | ii) the Request type IE is not included and the PDU session modification procedure is used to indicate a change of 3GPP PS data off UE status for a PDU session; or | | |
| | 2) the UE is a UE configured for high priority access in selected PLMN or SNPN. | | | |
| | The UL NAS TRANSPORT message can be sent, if still necessary, when timer T3346 expires. | | | |
| i) NAS MAC calculation indication from lower layers. | | | | |
| | If lower layers indicate to calculate an NAS MAC, the UE shall calculate an NAS MAC as specified in 3GPP TS 33.501 [24] and then provide the calculated NAS MAC and 5 least significant bits of the uplink NAS COUNT used to calculate the NAS MAC to lower layers (see 3GPP TS 36.331 [25A]). The UE shall increase the uplink NAS COUNT by one after the calculation of the NAS MAC. | | | |

As described above, the UE determines whether to abort the NSA transmission procedure by additionally considering at least one of whether the TA of the changed TAI supports the S-NSSAI included in the UL NAS transport message and the S-NSSAI-related reports obtained from lower layers. This can minimize errors that occur when a UE supporting partial network slice fails to transmit an NAS transport message.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a User Equipment (UE) in a wireless communication system, the method comprising:
initiating a non-access stratum (NAS) transport procedure;
detecting a transmission failure of an uplink (UL) NAS transport message due to a change in a tracking area identifier (TAI);
comparing a changed TAI with a TAI list; and
determining whether to abort the NAS transport procedure based on a comparison result,
wherein determining of whether to abort the NAS transport procedure is further based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.

2. The method of claim 1, wherein the NAS transport procedure is aborted when the changed TAI is included in the TAI list, the UE supports a partial network slice, the S-NSSAI is included in partially allowed NSSAI or partially rejected NSSAI, and a changed TA is not included in a TA list supporting the S-NSSAI.

3. The method of claim 2, wherein a registration procedure for mobility and a periodic registration update is controlled not to be initiated with abortion of the NAS transport procedure.

4. The method of claim 1, wherein the NAS transport procedure is re-executed based on an implementation of the UE, when the changed TAI is included in the TAI list and the UE does not support a partial network slice.

5. The method of claim 1, wherein the NAS transport procedure is re-executed based on an implementation of the UE, when the changed TAI is included in the TAI list, the UE supports a partial network slice, and the S-NSSAI is not included in partially allowed NSSAI or partially rejected NSSAI.

6. The method of claim 1, wherein the NAS transport procedure is re-executed based on an implementation of the UE, when the changed TAI is included in the TAI list, the UE supports a partial network slice, the S-NSSAI is included in partially allowed NSSAI or partially rejected NSSAI, and a changed TA is included in a TA list supporting the S-NSSAI.

7. The method of claim 1, wherein the NAS transport procedure is aborted when information informing that a changed cell does not support the S-NSSAI is obtained from an access stratum (AS) layer.

8. The method of claim 8, further comprising reporting that a transmission of the UL NAS transport message is failed due to the changed cell not supporting the S-NSSAI.

9. The method of claim 1, wherein the NAS transport procedure is aborted when the changed TAI is included in the TAI list, the S-NSSAI is included in an alternative NSSAI IE, and a TA of the changed TAI does not support the S-NSSAI which is alternative NSSAI.

10. The method of claim 1, wherein the NAS transport procedure is re-executed based on an implementation of the UE, when the changed TAI is included in the TAI list, the S-NSSAI is included in an alternative NSSAI IE, and a TA of the changed TAI supports the S-NSSAI which is alternative NSSAI.

11. The method of claim 1, wherein the NAS transport procedure is re-executed based on an implementation of the UE, when the changed TAI is included in the TAI list and the S-NSSAI is not included in an alternative NSSAI IE.

12. The method of claim 1, wherein the NAS transport procedure is aborted when the changed TAI is not included in the TAI list.

13. A User Equipment (UE) in a wireless communication system, the UE comprising:
a transceiver; and
a processor connected to the transceiver,
wherein the processor is configured to:
initiate a non-access stratum (NAS) transport procedure;
detect a transmission failure of an uplink (UL) NAS transport message due to a change in a tracking area identifier (TAI);
compare a changed TAI with a TAI list; and
determine whether to abort the NAS transport procedure based on a comparison result,
wherein determining of whether to abort the NAS transport procedure is further based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.

14. A communication device comprising:
at least one processor; and
at least one computer memory connected to the at least one processor and storing instructions that, based on being executed by the at least one processor, perform operations comprising:
initiating a non-access stratum (NAS) transport procedure;
detecting a transmission failure of an uplink (UL) NAS transport message due to a change in a tracking area identifier (TAI);
comparing a changed TAI with a TAI list; and
determining whether to abort the NAS transport procedure based on a comparison result,
wherein determining of whether to abort the NAS transport procedure is further based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.

15. A non-transitory computer-readable medium storing at least one instruction, the computer-readable medium comprising at least one instruction executable by a processor, the at least one instruction causing a device to:
initiate a Non-Access Stratum (NAS) transport procedure;
detect a transmission failure of an uplink (UL) NAS transport message due to a change of a Tracking Area Identifier (TAI);
compare a changed TAI with a TAI list; and
determine whether to abort the NAS transport procedure based on a comparison result,
wherein determining of whether to abort the NAS transport procedure is further based on at least one of whether a Tracking Area (TA) of the changed TAI supports Single Network Slice Selection Assistance Information (S-NSSAI) included in the UL NAS transport message, and a report related to the S-NSSAI obtained from a lower layer of the UE.
